# EUROPÄISCHE PATENTANMELDUNG

(11) **EP 1 692 971 A2**
(43) Veröffentlichungstag der Anmeldung: **23.08.2006**
(21) Anmeldenummer: 05028341.5
(22) Anmeldetag: 23.12.2005
(51) Int. Cl.: A47B 95/00, A47B 96/06

(54) **Feststeller für Rückwände an Kastenmöbeln und daran angepaßtes Kastenmöbel**

(30) Priorität: 18.02.2005 DE 102005007451
(71) Anmelder: CS Schmalmöbel GmbH & Co. KG, 66914 Waldmohr (DE)
(72) Erfinder: Hinsberger, Thomas, 66578 Schiffweiler (DE); Ruppert, Stefan, 66424 Homburg (DE); Müürmann, Edwin, 66914 Waldmohr (DE)
(74) Vertreter: Elbertzhagen, Otto

(57) **Zusammenfassung**

Ein solcher Feststeller dient der Fixierung von eingenuteten Rückwänden an Kastenmöbeln. Er hat winklig zueinander stehende Anlagestege (2) und zumindest einen an deren zueinander gekehrten Seiten anschließenden Versteifungssteg (7, 9). Im Bereich der Anlagestege (2) befinden sich Durchgangslöcher (6) für Fixierstifte oder -schrauben zur Sicherung der jeweiligen Rückwand. Zur Erzielung einer zusätzlichen Wandbefestigung ist im Bereich des Versteifungssteges (7, 9) zumindest ein Durchgangsloch (12) für den Durchtritt einer Dübelschraube (19) angeordnet. Für die Anbringung dieser Dübelschraube (19) sind in der Rückwand 16 des betreffenden Kastenmöbels (13) Durchgangsbohrungen (20) vorgesehen.

## Beschreibung

Die Erfindung bezieht sich auf einen Feststeller für eingenutete Rückwände an Kastenmöbeln gemäß den Merkmalen des Oberbegriffs des Patentanspruchs 1. Des weiteren bezieht sie sich auf ein Kastenmöbel mit den Merkmalen des Oberbegriffs des Patentanspruchs 12.

Bekannte Feststeller der vorgenannten Art sind als Eckwinkel ausgebildet, um sie bei einem Kastenmöbel, insbesondere bei einem Schrank, an der Außenseite der Rückwand im Bereich der Innenecken zwischen einem Korpusboden und einer Korpusseite annageln oder anschrauben zu können. Derartige Feststeller haben den Vorzug, daß bei entsprechend stabiler Ausführung des einstückigen Eckwinkels nicht nur die Rückwand des Kastenmöbels sicher gehalten ist sondern auch die Korpusteile, im vorbestimmten Winkel zueinander ausgerichtet miteinander fixiert sind. In der Regel geht es um Kastenmöbel mit einem quadratischen oder rechteckigen Aufriß, entsprechend sind die Eckwinkel rechtwinklig, so daß auch die Anlagestege der Feststeller unter einem 90°-Winkel zueinander stehen.

Der Erfindung liegt die Aufgabe zugrunde, Feststeller und ein Kastenmöbel der eingangs genannten Art zu schaffen, bei denen zusätzlich eine Wandbefestigung des Kastenmöbels möglich ist.

Diese Aufgabe wird durch die Merkmale der Patentansprüche 1 und 12 gelöst.

Für die Erfindung ist wesentlich, daß an dem betreffenden Kastenmöbel im Bereich zumindest einer der oberen Innenecken an der Außenseite der Rückwand ein solcher Feststeller verwendet wird, der mittels einer Dübelschraube an einer Zimmerwand befestigt werden kann, in der entsprechend ein in ein Dübelloch eingesetzter Dübel vorgesehen wird.

Vorteilhafte Ausgestaltungsmerkmale der Erfindung ergeben sich aus den Unteransprüchen.

Die Erfindung wird nachfolgend anhand der Zeichnung an Ausführungsbeispielen noch näher erläutert. Dabei zeigen:
- Fig. 1: einen Feststeller in perspektivischer Ansicht,
- Fig. 2: die Draufsicht auf den Feststeller nach Fig. 1,
- Fig. 3: eine perspektivische Wiedergabe eines mittels des Feststellers nach den Figuren 1 oder 2 an einer Wand zu befestigenden Kastenmöbels,
- Fig. 4: eine perspektivische Rückansicht einer der Innenecken an der Rückseite der Rückwand des Kastenmöbels nach Fig. 3 und
- Fig. 5: eine perspektivische Rückansicht des oberen Bereichs des Kastenmöbels nach Fig. 3.

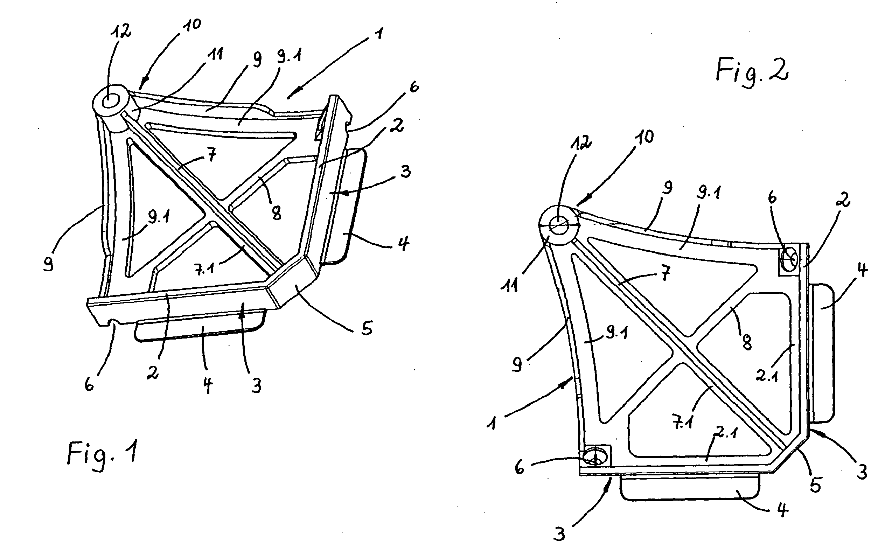

Im einzelnen zeigen Fig. 1 und 2 einen Feststeller 1, der eine im wesentlichen viereckige Grundform aufweist. Zwei Seiten dieses Vierecks werden von Anlagestegen 2 gebildet, die an der Außenseite mit Anlageflächen 3 versehen sind, bei denen es sich um ebene Flächen handelt. Die Anlageflächen 3 stehen zu der Ebene, die von den Anlagestegen 2 aufgespannt wird, senkrecht, und des weiteren stehen die Anlageflächen 3 senkrecht zueinander. An den einen Längskanten der Anlagestege 2 sind Federstege 4 angeformt, die über die Anlageflächen 3 der Anlagestege 2 nach außen hin vorstehen und einen rechten Winkel mit den Anlageflächen 3 einschließen. Die Federstege 4 sind an derjenigen Längsseite der Anlagestege 2 angeordnet, die in der Einbaulage des Feststellers 1 an der Rückwand des betreffenden Kastenmöbels anliegt, worauf nachstehend noch näher eingegangen werden wird.

Die Anlagestege 2 und dementsprechend deren Anlageflächen 3 schließen nicht unmittelbar unter dem rechten Winkel aneinander an, vielmehr ist zwischen den Anlagestegen 2 eine stumpfe Ecke gebildet, dazu ist ein Verbindungsstück 5 vorgesehen, welches senkrecht zur Eckdiagonalen steht. Der gesamte Feststeller 1 ist einstückig ausgebildet, in bevorzugter Ausführung handelt es sich um ein Kunststoffspritzgußteil. So schließen die beiden Anlagestege 2 über das Verbindungsstück 5 einstückig aneinander an.

An ihren voneinander abliegenden Enden erstrecken sich durch die Anlagestege 2 hindurch Durchgangslöcher 6, die zu der Ebene der jeweiligen Anlagefläche 3 geneigt verlaufen, wobei der. Neigungswinkel in vorteilhafter Ausführung 45° beträgt. Durch die Durchgangslöcher 6 werden Fixierstifte oder Fixierschrauben hindurchgeführt, die dazu dienen, nicht nur den Feststeller 1 an den Korpusteilen des betreffenden Kastenmöbels festzulegen, sondern dabei auch die zu sichernde Rückwand zu durchdringen.

An die zueinander gekehrten Innenseiten der Anlagestege 2 schließen Versteifungsstege 7, 8 und 9 an, die zwischen sich Fensteröffnungen einschließen, um Materialanhäufungen zu vermeiden. Grundsätzlich können diese Stege auch mittels einer geschlossenen Platte ineinander übergehen. An das Verbindungsstück 5 zwischen den Anlagestegen 2 schließt der erste dieser Stege, nämlich der Steg 7, in Richtung der Eckdiagonalen an, dieser Steg 7 erstreckt sich somit entlang der Winkelhalbierenden desjenigen Winkels, den die beiden Anlagestege 2 miteinander einschließen. Aus Stabilitätsgründen hat der Versteifungssteg 7 einen T-förmigen Querschnitt, wobei der Dachsteg 7.1 zu derjenigen Seite des Feststellers 1 hin liegt, die für die Anlage an der Rückwand des betreffenden Kastenmöbels bestimmt ist. Gekreuzt wird der Versteifungssteg 7 durch einen Quersteg 8, der an die Endbereiche der Anlagestege 2 anschließt. Von diesen Endbereichen der Anlagestege 2 verlaufen seitliche Versteifungsstege 9 bis zu einem Knoten 10 an dem dem Ende mit dem Verbindungsstück 5 gegenüberliegenden Ende des Versteifungsstegs 7. Diese Versteifungsstege 9 bilden die weiteren Viereckseiten des Feststellers 1, sie verlaufen jedoch nicht in gerader Richtung sondern sind leicht nach innen hin gewölbt. Anders als die Anlagestege 3, die rechtwinklig zueinander stehen, schließen die beiden Versteifungsstege 9 einen spitzen Winkel miteinander ein, um einen großen Abstand des Knotens 10 von dem Eckstück 5 zu erzielen.

Im Bereich des Knotens 10 schließen die Versteifungsstege 7 und 9 an eine Buchse 11 an, durch die hindurch sich ein Durchgangsloch 12 erstreckt. Die Achse dieses Durchgangslochs 12 steht senkrecht zu der Ebene, die von den Anlagestegen 2 aufgespannt wird, bei der es sich um die gleiche oder eine damit parallele Ebene handelt, mit der der gesamte Feststeller 1 an die Rückwand des betreffenden Kastenmöbels angelegt werden kann. In dieser Ebene liegen auch die einen breiteren Seiten des Quersteges 8, des Dachsteges 7.1 des Versteifungssteges 7 und von Schenkelstegen 9.1 der im Querschnitt V-förmigen Versteifungsstege 9. Die zu dieser Seite hin liegende Stirnseite der Buchse 11 ist ebenfalls bündig mit dieser Ebene, in der sich die Anlageseite 24 des Feststellers 1 erstreckt.

Die Figuren 3 bis 5 zeigen die Funktion des Feststellers 1 und seine Einbaulage. In der gesprengten Darstellung von Fig. 3 ist die ebene Anlageseite 24 des Feststellers 1 zu erkennen. Senkrecht zu der Anlageseite 24 verläuft die Achse des Durchgangslochs 12 der Buchse 11 des Feststellers 1. In gleicher Weise wie die Versteifungsstege 9 sind die Anlagestege 2 im Querschnitt V-förmig und weisen mit den Schenkelstegen 9.1 der Versteifungsstege 9 ebenengleiche Schenkelstege 1.1 auf, deren eine Seite einen Teil der Anlageseite 24 des Feststellers 1 bildet.

In Fig. 3 ist ein Kastenmöbel 13 gezeigt, welches einen Oberboden 14 und Seitenteile 15 als Korpusteile aufweist, in die eine Rückwand 16 eingenutet ist. Mittels des mit seiner Anlageseite 24 auf der Außenseite der Rückwand 16 aufliegenden Feststellers 1 wird das Kastenmöbel 13 an einer Zimmerwand 23 in seinem oberen Bereich befestigt, um das Kastenmöbel 13 gegen ein Umkippen zu sichern. Dabei besteht eine Formschlußsicherung des Feststellers 1 an den Korpusteilen 14, 15 zusätzlich zu den Fixierstiften oder -schrauben 18 (siehe Fig. 4), die durch die Durchgangslöcher 6 in den Endbereichen der Anlagestege 2 hindurch in die Korpusteile 14, 15 eingetrieben werden. Denn der Feststeller 1 greift mit seinen Federstegen 14, die über die Anlagestege 2 nach außen hin vorstehen, neben der Rückwand 16 in die Nuten ein, die an den Korpusteilen 14, 15 nahe deren rückwärtigen Schmalseiten 14.1, 15.1 (siehe Fig. 4) angeordnet sind.

In die Zimmerwand 23, an welcher das Kastenmöbel 13 befestigt wird, werden Dübellöcher 22 eingebohrt und darin Dübel 21 eingesetzt, und zwar in der Weise, daß die Längsachse des Dübels 21 mit der Achse des Durchgangslochs 12 am Knoten 10 des Feststellers 1 fluchtet. In der gleichen Flucht sind in der Rückwand 16 des Kastenmöbels 13 Durchgangsbohrungen 20 vorgesehen, durch die hindurch Dübelschrauben 19 eingeschraubt werden, welche jeweils durch das Durchgangsloch 12 des Feststellers 1 hindurch in den wandseitigen Dübel 21 eingeschraubt werden. Hiernach liegen die Dübelschrauben 19 mit ihren Köpfen 19.1 bzw. mit darunterliegenden Unterlegscheiben im Randbereich der Durchgangsbohrungen 20 auf der Innenseite der Rückwand 16 auf. Die Buchse 12 am Feststeller 1 wirkt hierbei als Distanzhülse zwischen der Außenseite der Rückwand 16 des Kastenmöbels 13 und der Zimmerwand 23. Die Durchgangsbohrungen 20 können schon bei der Fertigung der Rückwand 16 angebracht werden und erzwingen so eine lagerichtige Anbringung des Feststellers 1.

Wie im einzelnen aus Fig. 4 hervorgeht, besteht zwischen der Außenseite der Rückwand 16 und den rückwärtigen Schmalseiten 14.1, 15.1 der Korpusteile 14, 15 eine Brüstung 17, an deren Breite die Breite der Anlageflächen 3 der Anlagestege 2 des Feststellers 1 angepaßt ist. Die Buchse 11 am Feststeller 1 hat eine dieser Breite entsprechende Länge, um als Distanzelement zwischen der Rückseite der Rückwand 16 und der Zimmerwand 23 fungieren zu können. Beim Anziehen der Dübelschrauben 19 wird daher vermieden, daß die Rückwand 16 sich zur Zimmerwand 23 hin ausbeult.

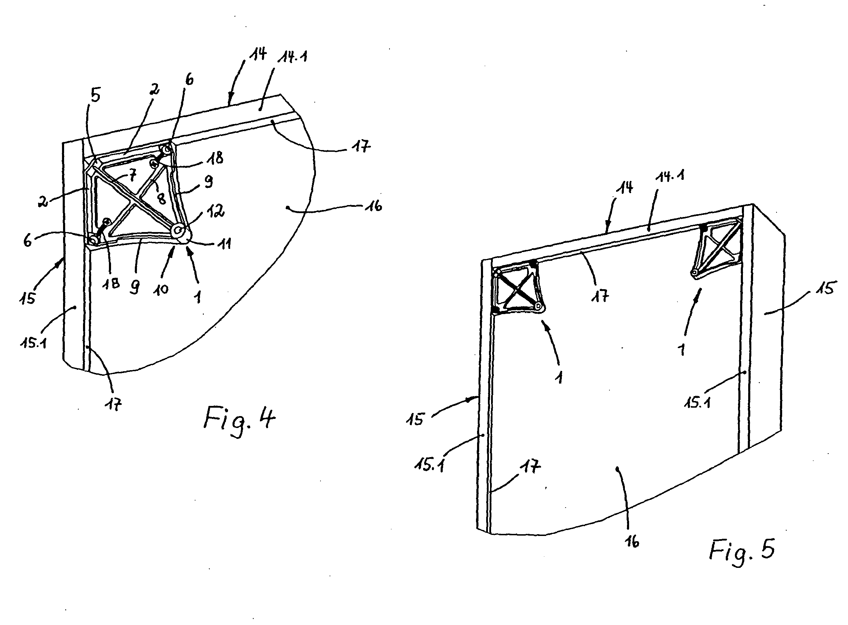

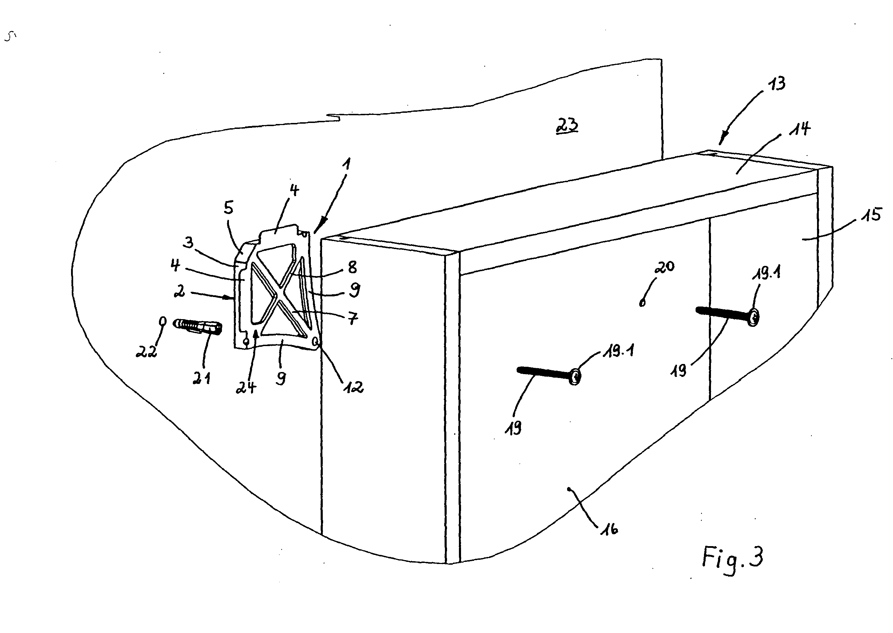

Bei kleineren Kastenmöbeln kann schon einer der Feststeller 1 ausreichen, um eine sichere Wandbefestigung zu ermöglichen. Eine größere Sicherheit erreicht man mit zwei Feststellern 1 der beschriebenen Art, was in Fig. 5 veranschaulicht ist. In jedem Fall wird ein solcher Feststeller 1 im Bereich der oberen Innenecke zwischen den Korpusteilen 14, 15 an der Außenseite der eingenuteten Rückwand 16 angeordnet und von der Innenseite der Rückwand 16 her durch die Dübelschraube 19 gesichert.

## Patentansprüche

1. Feststeller für eingenutete Rückwände an Kastenmöbeln mit winklig zueinander stehenden Anlagestegen (2) und mit zumindest einem an deren von den Anlageseiten abliegenden Seiten anschließenden Versteifungssteg (7, 9), wobei die Anlagestege (2) Durchgangslöcher (6) zur Aufnahme von Fixierstiften oder -schrauben aufweisen und die Achsen dieser Durchgangslöcher (6) zu der von den Anlagestegen (2) aufgespannten Ebene parallel oder schräg verlaufen,
**dadurch gekennzeichnet,**
**daß** im Bereich des wenigstens einen Versteifungsstegs (7, 9) zumindest ein Durchgangsloch (12) für den Durchtritt einer Dübelschraube (19) angeordnet ist, dessen Achse senkrecht zu der von den Anlagestegen (2) aufgespannten Ebene steht.

2. Feststeller nach Anspruch 1,
**dadurch gekennzeichnet,**
**daß** das Durchgangsloch (12) im Bereich des Versteifungssteges (7, 9) auf der Winkelhalbierenden des von den Anlagestegen (2) eingeschlossenen Winkels angeordnet ist.

3. Feststeller nach Anspruch 1 oder 2,
**dadurch gekennzeichnet,**
**daß** an die Anlagestege (2) zwei oder mehrere Versteifungsstege (7, 9) anschließen, die in einem Knoten (10) zusammenlaufen und miteinander verbunden sind, wobei sich das Durchgangsloch (12) für den Durchtritt der Dübelschraube (19) in dem Knoten (10) befindet.

4. Feststeller nach Anspruch 3,
**dadurch gekennzeichnet,**
**daß** einer der Versteifungsstege (7, 9) entlang der Winkelhalbierenden des von den Anlagestegen (2) eingeschlossenen Winkels sich erstreckt.

5. Feststeller nach Anspruch 3 oder 4,
**dadurch gekennzeichnet,**
**daß** von den Endbereichen der Anlagestege (2) zum Knoten (10) hin sich zwei der Versteifungsstege (7, 9) erstrecken.

6. Feststeller nach einem der Ansprüche 1 - 5,
**dadurch gekennzeichnet,**
**daß** die Versteifungsstege (7, 9) und die Anlagestege (2) im Querschnitt V- oder T-förmig sind.

7. Feststeller nach einem der Ansprüche 1 - 6,
**dadurch gekennzeichnet,**
**daß** das Durchgangsloch (12) für den Durchtritt der Dübelschraube (19) Teil einer an den zumindest einen Versteifungssteg (7, 9) angeformten Buchse (11) ist.

8. Feststeller nach einem der Ansprüche 1 - 7,
**dadurch gekennzeichnet,**
**daß** die Anlagestege (2) an ihren Anlageseiten Anlageflächen (3) haben, deren Breite gleich der Breite der Brüstung (17) zwischen der Rückwand (16) und den rückwärtigen Schmalseiten (14.1, 15.1) der Korpusteile (14, 15) des zur Verwendung des Feststellers (1) vorgesehenen Kastenmöbels ist.

9. Feststeller nach Anspruch 8,
**dadurch gekennzeichnet,**
**daß** die Buchse (11) mit dem Durchgangsloch (12) eine axiale Länge gleich der Breite der Anlageflächen (3) der Anlagestege (2) hat.

10. Feststeller nach Anspruch 8 oder 9,
**dadurch gekennzeichnet,**
**daß** an der einen Längsseite der Anlageflächen (3) Federstege (4) an den Anlagestegen (2) angeformt sind, die rechtwinklig über die Anlageflächen (3) vorstehen.

11. Feststeller nach einem der Ansprüche 1 - 10,
**dadurch gekennzeichnet,**
**daß** die Anlagestege (2) rechtwinklig zueinander angeordnet sind und der gesamte Feststeller (1) spiegelsymmetrisch zur Winkelhalbierenden dieses rechten Winkels ausgebildet ist.

12. Kastenmöbel mit einer eingenuteten Rückwand (16) zur Verwendung mit zumindest einem Feststeller (1) nach wenigstens einem der vorangehenden Ansprüche, wobei dieser Feststeller (1) in einer der rückwärtigen, oberen Innenecken zwischen den die Rückwand (16) aufnehmenden Korpusteilen (14, 15) an der Au-βenseite der Rückwand (16) anzuordnen ist,
**dadurch gekennzeichnet,**
**daß** die Rückwand (16) in axialer Flucht mit dem für den Durchtritt der Dübelschraube (19) bestimmten Durchgangsloch (12) am Feststeller (1) eine Durchgangsbohrung (20) für die Dübelschraube (19) aufweist.
